(19) Europäisches Patentamt

European Patent Office

Office européen des brevets

(11) **EP 0 679 421 B1**

(12) **FASCICULE DE BREVET EUROPEEN**

(45) Date de publication et mention
de la délivrance du brevet:
**01.09.1999 Bulletin 1999/35**

(51) Int. Cl.⁶: **B01D 15/02**

(21) Numéro de dépôt: **95400904.9**

(22) Date de dépôt: **24.04.1995**

(54) **Procédé de séparation en lit mobile simulé à débit de recyclage constant**

"Simuliertes Wanderbett"-Trennungsverfahren mit konstantem Rezirkulationsstrom

Simulated moving bed process with constant recirculation flow

(84) Etats contractants désignés:
**BE CH DE GB IT LI NL**

(30) Priorité: **28.04.1994 FR 9405293**

(43) Date de publication de la demande:
**02.11.1995 Bulletin 1995/44**

(73) Titulaires:
- **INSTITUT FRANCAIS DU PETROLE
92502 Rueil-Malmaison (FR)**
- **SEPAREX
F-54250 Champigneulles (FR)**

(72) Inventeur: **Hotier, Gérard
F-92500 Rueil Malmaison (FR)**

(56) Documents cités:
EP-A- 0 577 079       WO-A-93/22022
US-A- 3 268 605

## Description

L'invention concerne un procédé de séparation en lit mobile simulé à débit de recyclage sensiblement constant.

Il s'applique particulièrement à toutes les séparations chromatographiques mettant en oeuvre un lit mobile simulé conventionnel dont il constitue une nouvelle génération. On peut citer par exemple la séparation des xylènes, celles des normales et isoparaffines, la séparation des sucres (glucose, fructose) ainsi que les applications plus récentes telles que la séparation des isomères optiques ou des acides aminés.

L'art antérieur est par exemple illustré dans les brevets US 2 985 589 et US 4 498 991 qui constituent les descriptions de base pour le premier du contre-courant simulé et pour le suivant, du co-courant simulé. Il est explicitement stipulé que chacun des flux entrant ou sortant permute simultanément et périodiquement avec tous les autres. Dans le brevet US 5 114 590, chacun des flux reste, période par période, permuté simultanément avec les autres, sauf un en particulier qui prend deux positions différentes pendant la durée de la période de permutation T .L'art antérieur connaît donc une période unique T entre deux permutations successives de chacun des flux, le produit de cette période par le nombre n de tronçons de colonnes ou de lits indépendants : n. T constitue le temps de cycle.

Un tel procédé de séparation en lit mobile simulé conventionnel est opéré basiquement avec soit 4 soit 5 débits différents sur la pompe de recyclage ; ces débits correspondent aux débits dans les quatre ou cinq zones du procédé. Dans la pratique industrielle, pour des raisons pratiques correspondant à des purges de lignes véhiculant des flux différents, on connaît même des procédés opérés avec six ou sept débits différents sur cette pompe. Plusieurs inconvénients sont liés au fait qu'au cours de chaque cycle, la pompe de recyclage change autant de fois de débits qu'il y a de zones dans le procédé :

- Cette pompe doit être dimensionnée pour le plus fort des débits : elle se trouve de facto surdimensionnée pour les autres.
- A chacun des changements de débit, le profil de pression dans les colonnes subit une brusque variation inévitable qui perturbe entre autres le débit du flux sortant sous contrôle de pression (le raffinat).
- A chacun de ces changements, le passage d'un débit au suivant n'est pas instantané, par exemple sur une unité industrielle, une valeur de 2 secondes pour passer d'un débit à l'autre implique déjà une bonne régulation : il en résulte que pendant environ 10 secondes sur un cycle de l'ordre de 2000 secondes le débit est mal défini.
- On doit en permanence s'assurer que le débit dans chaque zone reste constant quelle que soit la position des zones par rapport à la pompe de recyclage. Compte tenu des imperfections des mesures et régulations des débits de recyclage et des entrées et sorties, il est difficile d'avoir une fluctuation de débit inférieure à 2 ‰.

L'art antérieur WO 9322022 par ailleurs décrit un système en lit mobile simulé à débit de recyclage constant : on y déplace en effet la pompe de recyclage de la même manière que les points d'introduction et prélèvement et de ce fait, cette dernière est toujours située dans la même zone et elle garde ipso facto un débit constant. Cependant, ce système impose que chaque tronçon du lit mobile simulé soit dans une colonne distincte et, qu'outre ses liaisons avec les circuits d'introduction et de prélèvement et avec les tronçons précédant et suivant, chaque tronçon soit lié à l'aspiration et au refoulement de la pompe de recyclage et isolable, rendant évidemment le coût du système beaucoup plus cher.

L'objet de l'invention est de décrire un procédé de séparation en lit mobile simulé à débit de recyclage sensiblement constant, permettant de remédier aux inconvénients cités plus haut, sans avoir recours à une pompe déplacée périodiquement avec les points d'injection et soutirage.

Plus généralement, l'invention concerne un procédé de séparation en lit mobile simulé d'une charge d'au moins 2 constituants en présence d'au moins un solvant, dans un dispositif de n tronçons de colonnes chromatographiques définissant au moins 4 zones et au plus z zones comportant une pompe de recyclage d'un mélange de solvant et de constituants située entre les tronçons n et 1 et se trouvant successivement dans chacune des zones au cours d'un cycle, le dispositif de n tronçons de colonnes comportant z.n points d'introduction et prélèvement, tels que au cours du cycle, chacun des z circuits d'introduction et prélèvement se trouve raccordé successivement à chacun des n points d'introduction ou de prélèvement qui lui correspond, le procédé étant caractérisé en ce qu'on fait circuler par la pompe de recyclage un débit $Q_c$ de recyclage dudit mélange sensiblement constant, durant le cycle, ce débit $Q_c$ étant supérieur au plus fort des z débits d'entrée-sortie injecté ou prélevé dans le dispositif et on fait permuter tout le long du cycle tous les circuits d'introduction et de prélèvement grâce à des moyens indépendants les uns des autres, de manière que le volume élué à la sortie de chaque zone reste sensiblement constant, zone par zone, entre deux permutations successives tout le long du cycle.

Par l'expression moyens indépendants les uns des autres, on entend soit n.z vannes tout ou rien commandant l'entrée ou la sortie des fluides dans ou de la boucle soit z vannes à n positions commandant l'entrée ou la sortie dans ou de la boucle, lesdites vannes étant reliées à une centrale de commande.

On a adopté un système de numérotation des tronçons tel que la pompe de recyclage se trouve apparaître entre les tronçons n et 1. Cette numérotation est bien sûr arbitraire. Toute autre convention pourrait être adoptée.

Selon un premier mode de mise en oeuvre, quand on recherche de très grandes puretés, on peut faire permuter tous les flux à des instants différents. Plus précisément, on peut faire permuter chacun des circuits avec un séquençage de temps qui lui est propre, après un intervalle de temps $T^j_{i+1} - T^{j-1}_i$ ), défini par la relation :

$$0,975\,T\,.\,Qk < (T^j_{i+1} - T^{j-1}_i)\,.\,Q^p_k < 1,025\,T\,.\,Q_k$$

j étant le numéro du tronçon précédant immédiatement le point d'introduction ou prélèvement ; i étant le nombre de fois dont le plus lent des circuits de prélèvement ou d'introduction a permuté depuis le début du cycle, T, $Q_k$ et $Q^p_k$ représentant respectivement l'intervalle de temps constant du lit mobile simulé conventionnel équivalent, le débit constant en zone k du lit mobile simulé conventionnel équivalent, et le débit en zone k du lit mobile simulé à recyclage constant lorsque la pompe se trouve en zone p.

De manière préférée, chacun des circuits peut être permuté après un intervalle de temps défini par la relation :

$$0,9975\,T\,.\,Qk < (T^j_{i+1} - T^{j-1}_i)\,.\,Q^p_k < 1,0025\,T\,.\,Q_k$$

Dans ces conditions on peut séparer des produits avec une pureté pouvant approcher 100%.

Selon un deuxième mode de mise en oeuvre du procédé correspondant à l'obtention de produits de plus faible pureté, on peut faire permuter, simultanément, tout le long du cycle, tous les circuits d'introduction et de prélèvement à des intervalles de temps $(T_{i+1} - T_i)$, où i, compris entre 0 et n-1, représente le nombre de fois où l'ensemble des points d'introduction et de prélèvement a déjà permuté depuis le début du cycle, $(T_{i+1} - T_i)$ étant défini par la relation suivante :

$$0,975\,T\,.\,Q_M < (T_{i+1} - T_i)\,.\,Q_{M_k} < 1,025\,T\,.\,Q_M$$

où T, $Q_M$ et

$$Q_{Mk}$$

représentent respectivement l'intervalle de temps constant du lit mobile simulé conventionnel équivalent, le débit pondéré moyen dans les zones de séparation du lit mobile simulé conventionnel équivalent, le débit pondéré moyen dans les zones de séparation du lit mobile simulé à recyclage constant lorsque la pompe de recyclage se trouve en zone k.

De façon avantageuse, la permutation simultanée, tout le long du cycle, de tous les circuits d'introduction et de prélèvement à des intervalles de temps définis par la relation :

$$0,9975\,T\,.\,Q_M < (T_{i+1} - T_i)\,.\,Q_{M_k} < 1,0025\,T\,.\,Q_M$$

permet d'améliorer substantiellement la pureté des produits séparés selon ce mode particulier de mise en oeuvre.

On peut opérer le procédé ainsi décrit en lit mobile simulé à contre-courant ou à co-courant selon que l'avancement des circuits est effectué respectivement dans le même sens ou en sens inverse de l'écoulement des courants liquides (US 2 985 589, US 4 498 991 par exemple).

Le fait d'opérer la pompe de recyclage à débit sensiblement constant fait automatiquement disparaître les difficultés de l'art antérieur. En effet,

- La pompe est dimensionnée sur un débit unique de préférence plus faible que le plus fort des débits évoqués précédemment.
- Les profils de pression ne subissent plus de bouleversement au moment du changement de consigne.
- Le débit restant sensiblement constant, peu importe que la régulation de débit ne réagisse que lentement.
- Les débits dans chaque zone ne restent pas constants au cours du cycle mais il suffit que les différences entre ces débits (qui représentent les débits des entrées et sorties) le restent pour que la cohérence interne du système soit strictement assurée.

Pour mettre en oeuvre ce système, on respecte généralement un certain nombre de contraintes :

- Le temps total de cycle est égal pour chacun des flux : chaque flux entrant et sortant doit parcourir la totalité de la boucle sensiblement dans le même temps que les autres. De manière corollaire chaque tronçon se retrouve dans une position identique par rapport à ces flux au bout du même temps : le temps de cycle.
- Dans le premier mode ci-avant de mise en oeuvre de l'invention, la gestion de chaque flux doit être faite de manière indépendante par rapport aux autres : soit une vanne tout ou rien par tronçon et par flux (en tout nz vannes) soit une vanne à n positions par flux c'est-à-dire en tout z vannes.
- Si les points de connexion d'un flux particulier, selon ce premier mode, se déplacent parfois plus vite que ceux du flux suivant (dans le sens du débit), le nombre de tronçons contenus dans cette zone en configuration initiale doit être au moins égal à 2, sous peine de retrouver ces deux flux entre les deux mêmes tronçons à des moments particuliers du cycle. Plus précisément, le système comporte au moins 2z-2 tronçons distincts dans l'ensemble du système.

On définit tout d'abord dans le cas général d'un lit mobile simulé (L.M.S.) conventionnel à 4 zones comportant $C_i$ tronçons pour chacune des quatre zones (i = 1 à 4), le débit pondéré moyen de recirculation $Q_M$ :

$$Q_M = \frac{C_1(Q_4+S)+C_2(Q_4+S\text{-}E)+C_3(Q_4+R)+C_4 Q_4}{n}$$

avec

$$n = \sum_{i=1}^{4} C_i,$$

où $Q_4$ est le débit en zone 4, et S, Ch, E, R les débits respectivement de solvant, de charge, d'extrait et de raffinat.

La transposition du lit mobile simulé conventionnel au lit mobile simulé à débit de recyclage constant se fait en première approximation par la règle suivante :

Le volume élué à la sortie de chaque zone reste sensiblement constant :

$$Q_k \cdot T = Q_k^p \cdot (T_{i+1}^j - T_i^{j\text{-}1}) \qquad \text{①}$$

où

- $Q_k$ représente le débit en zone k dans le lit mobile simulé conventionnel ($Q_1$, $Q_2$, $Q_3$, $Q_4$ pour un lit mobile simulé à 4 zones)
- T représente la période de permutation du lit mobile simulé conventionnel (valeur unique)
- $Q_k^p$ représente le débit en zone k dans le lit mobile simulé à débit à recyclage constant lorsque la pompe se trouve en zone p.
- $T_{i+1}^j$ représente l'instant où le flux prélevé ou introduit permute de la sortie du $j^{eme}$ tronçon à la sortie du tronçon suivant, où :

    * j est le numéro du tronçon précédant immédiatement le point d'introduction ou de prélèvement,
    * i est le nombre de fois dont le plus lent des z circuits a déjà permuté depuis le début du cycle.

$[Q_k^p]$ et $[T_{i+1}^j]$ sont des matrices carrées de dimension n x n où n représente le nombre de tronçons dans le procédé. Ces matrices comportent :

- pour la première au moins $z^2$ termes différents,
- pour la seconde au moins n x z termes différents.

La régle concrétisée par l'équation ① doit être examinée pour déterminer ses conditions de validité :

• Elle ne préjuge en rien de la forme des isothermes d'adsorption : dans tout lit mobile simulé conventionnel, le volume sortant de chaque zone $Q_k$ x T reste sensiblement constant pendant tout le cycle.

- Pour être strictement vraie, elle implique que le transfert de masse ne dépende pas de la vitesse linéaire dans la gamme des débits appliqués. Si la courbe de Van Demeter (HEPT = f(VSL) ) est très pentue dans cette gamme, il faudra procéder à des corrections à la portée de l'homme de l'art.

Examinons maintenant de manière concrète la série d'équations découlant de l'égalité ① pour un lit mobile simulé. conventionnel et un lit mobile simulé à débit de recyclage constant comprenant chacun 4 zones de 2 tronçons ou colonnes (soit en tout 8 colonnes ou tronçons). Par définition,

- la zone 1 est comprise entre le point d'injection du solvant et le point de soutirage d'extrait, dans cette zone la valeur du débit est $Q_{1=}Q_4+S$ pour le lit mobile simulé conventionnel.

- la zone 2 est comprise entre le point de soutirage d'extrait et le point d'injection de la charge, dans cette zone la valeur du débit est $Q_{2=}Q_4+S-E$ pour le lit mobile simulé conventionnel.

- la zone 3 est comprise entre le point d'injection de la charge et le point de soutirage de raffinat, dans cette zone la valeur du débit est $Q_{3=}Q_4+R$ pour le lit mobile simulé. conventionnel.

- la zone 4 est comprise entre le point de soutirage du raffinat et le point d'injection du solvant, dans cette zone la valeur du débit est $Q_4$ pour le lit mobile simulé conventionnel.

- le débit constant appliqué à la pompe de recyclage du lit mobile simulé à débit de recyclage constant est $Q_c$.

Dans les tableaux 1 et 2 établis respectivement pour le lit mobile simulé conventionnel et le lit mobile simulé à débit de recyclage constant, figurent dans chaque case du tableau, successivement l'instant où chaque colonne ou tronçon se trouve permuté par rapport aux zones et le débit dans la colonne ou tronçon immédiatement avant que cette permutation n'intervienne. Chaque colonne de ces tableaux correspond donc à un tronçon particulier, tandis que chaque ligne du tableau 1 correspond à une étape particulière du lit mobile simulé conventionnel. Enfin chaque ligne du tableau 2 correspond en fait à une série d'étapes différentes : la $p^{eme}$ ligne, par exemple présente la $p^{eme}$ permutation de chacun des huit tronçons. Conventionnellement $T_p^j$ représentera la $p^{eme}$ permutation du $j^{eme}$ tronçon (en numérotant les tronçons de gauche à droite) lorsque l'on pose que les points d'introduction et de prélèvement (donc les zones) permutent de la gauche vers la droite.

On place la pompe de recyclage entre le tronçon 8 et les prélèvements d'extrait et raffinat en sortie du tronçon 8. De cette manière les tableaux 1 et 2 sont aussi bien valables pour un contre courant que pour un co-courant simulé.

TABLEAU 1

| Lit mobile simulé conventionnel | | | | | | | |
|---|---|---|---|---|---|---|---|
| $T, Q_4 + S$ | $T, Q_4 + S$ | $T, Q_4+S-E$ | $T, Q_4+S-E$ | $T, Q_4 + R$ | $T, Q_4 + R$ | $T, Q_4$ | $T, Q_4$ |
| $2T, Q_4$ | $2T, Q_4 + S$ | $2T, Q_4 + S$ | $2T, Q_4+S-E$ | $2T, Q_4+S-E$ | $2T, Q_4 + R$ | $2T, Q_4 + R$ | $2T, Q_4$ |
| $3T\ Q_4$ | $3T, Q_4$ | $3T, Q_4 + S$ | $3T, Q_4 + S$ | $3T, Q_4+S-E$ | $3T, Q_4+S-E$ | $3T, Q_4 + R$ | $3T, Q_4 + R$ |
| $4T, Q_4 + R$ | $4T, Q_4$ | $4T, Q_4$ | $4T, Q_4 + S$ | $4T, Q_4 + S$ | $4T, Q_4+S-E$ | $4T, Q_4+S-E$ | $4T, Q_4 + R$ |
| $5T, Q_4 + R$ | $5T, Q_4 + R$ | $5T, Q_4$ | $5T, Q_4$ | $5T, Q_4 + S$ | $5T, Q_4 + S$ | $5T, Q_4+S-E$ | $5T, Q_4+S-E$ |
| $6T, Q_4+S-E$ | $6T, Q_4 + R$ | $6T, Q_4 + R$ | $6T, Q_4$ | $6T, Q_4$ | $6T, Q_4 + S$ | $6T, Q_4 + S$ | $6T, Q_4+S-E$ |
| $7T, Q_4+S-E$ | $7T, Q_4+S-E$ | $7T, Q_4 + R$ | $7T, Q_4 + R$ | $7T, Q_4$ | $7T, Q_4$ | $7T, Q_4 + S$ | $7T, Q_4 + S$ |
| $8T, Q_4 + S$ | $8T, Q_4+S-E$ | $8T, Q_4+S-E$ | $8T, Q_4 + R$ | $8T, Q_4 + R$ | $8T, Q_4$ | $8T, Q_4$ | $8T, Q_4 + S$ |

TABLEAU 2

| Lit mobile simulé à recyclage constant ( $Q_c$ sur la pompe) | | | | | | | |
|---|---|---|---|---|---|---|---|
| $T_1^1, Q_c+S$ | $T_1^2, Q_c+S$ | $T_1^3, Q_c+S-E$ | $T_1^4, Q_c+S-E$ | $T_1^5, Q_c+R$ | $T_1^6, Q_c+R$ | $T_1^7, Q_c$ | $T_1^8, Q_c$ |
| $T_2^1, Q_c$ | $T_2^2, Q_c+S$ | $T_2^3, Q_c+S$ | $T_2^4, Q_{c+}S-E$ | $T_2^5, Q_c+S-E$ | $T_2^6, Q_c+R$ | $T_2^7, Q_c+R$ | $T_2^8, Q_c$ |
| $T_3^1, Q_c-R$ | $T_3^2, Q_c-R$ | $T_3^3, Q_c+S-R$ | $T_3^4, Q_c+S-R$ | $T_3^5 Q_c+S-E-R$ | $T_3^6, Q_c+S-E-R$ | $T_3^7 Q_c$ | $T_3^8 Q_c$ |
| $T_4^1, Q_c$ | $T_4^2 n, Q_c-R$ | $T_4^3, Q_c-R$ | $T_4^4, Q_c+S-R$ | $T_4^5, Q_c+S-R$ | $T_4^6, Q_c+S-E-R$ | $T_4^7, Q_c+S-E-R$ | $T_4^8, Q_c$ |
| $T_5^1, Q_c+R+E-S$ | $T_5^2, Q_c+R+E-S$ | $T_5^3, Q_c+E-S$ | $T_5^4, Q_c+E-S$ | $T_5^5, Q_c+E$ | $T_5^6, Q_c+E$ | $T_5^7, Q_c$ | $T_5^8, Q_c$ |
| $T_6^1, Q_c$ | $T_6^2, Q_c+R+E-S$ | $T_6^3, Q_c+E-S$ | $T_6^4, Q_c+E-S$ | $T_6^5, Q_c+E-S$ | $T_6^6, Q_c+E$ | $T_6^7, Q_c+E$ | $T_6^8, Q_c$ |
| $;T_7^1, Q_c-E$ | $T_7^2, Q_c-E$ | $T_7^3, Q_c-S+R$ | $T_7^4, Q_c-S-R$ | $T_7^5, Q_c-S$ | $T_7^6, Q_c-S$ | $T_7^7, Q_c$ | $T_7^8, Q_c$ |
| $T_8^1, Q_c$ | $T_8^2, Q_c-E$ | $T_8^3, Q_c-E$ | $T_8^4, Q_c-S-R$ | $T_8^5, Q_c-S+R$ | $T_8^6, Q_c-S$ | $T_8^7, Q_c-S$ | $T_8^8, Q_c$ |

Selon une première variante de réalisation, à contre courant simulé à débit de recyclage constant, la solution stricte pour un lit à 4 zones est alors la suivante :
les débits $Q_1$, $Q_2$, $Q_3$, $Q_4$ sont orientés de la gauche vers la droite , et , par convention, on leur attribuera une valeur algébrique positive.

On se place dans le cas le plus fréquent c'est-à-dire que le débit de solvant est le plus grand des quatre débits d'entrée-sortie, tandis que le débit de charge est le plus faible :

$$Q_1 \geq Q_3 > Q_2 \geq Q_4 \begin{cases} E \geq Ch \Rightarrow Q_1 \geq Q_3 \Leftarrow R \leq S \\ R \geq Ch \Rightarrow Q_2 \geq Q_4 \Leftarrow E \leq S \end{cases}$$

-   Dans un premier mode de réalisation, on se place dans le cas où :

$$Q_c > Q_4 \qquad ②$$

On exprime alors $Q_c$ sous la forme $Q_c = Q_4 + K$
puisque $Q_1 = Q_4 + S > Q_4 + R = Q_3 > Q_4 + S - E = Q_2 > Q_4$, il vient :

$$Q_c + S > Q_c + R > Q_c + S - E > Q_c \qquad ③$$

On peut alors établir l'ordre de séquençage des vannes de manière à calculer $[T_j^i]$
      Il importe tout d'abord de savoir à quel moment la pompe de recyclage change de zone de manière à établir, zone par zone, les quatre séries d'équations permettant de calculer les différents $T_j^i$ en fonction de $Q_4$, S, Ch, E, R, $Q_c$ et T.
Puisque l'on a posé $Q_c = Q_4 + K$, on peut comparer $T_1^2$ et $T_1^6$ les temps de permutation de la fin des zones 1 et 3 :

$$T_1^2 = T.(Q_4 + S)/(Q_c + S) \equiv T.(Q_4 + S)/(Q_4 + K + S)$$

$$T_1^6 = T.(Q_4 + R)/(Q_c + R) \equiv T.(Q_4 + R)/(Q_4 + K + R)$$

$$S \geq R \Rightarrow SK \geq RK$$

$$\Rightarrow Q_4^2 + (S + R + K) Q_4 + S(K + R) \geq Q_4^2 + (S + R + K) Q_4 + R(K + S)$$

$$\text{soit } (Q_4 + S).(Q_4 + K + R) \geq (Q_4 + R)(Q_4 + K + S) \Rightarrow T_1^2 \geq T_1^6 \quad ④$$

Pour la première ligne du tableau, il est donc facile de démontrer

$$T_1^2 > T_1^6 > T_1^4 > T_1^8$$

Plus généralement, quelle que soit la situation de la pompe au cours du cycle, la vanne en sortie de zone 4 permute la première (injection de solvant) suivie de la vanne en sortie de zone 2 (injection de charge) puis la vanne en sortie de zone 3 (prélèvement de raffinat), enfin la dernière vanne à permuter est celle en sortie de zone 1 (prélèvement d'extrait). L'invention ne peut être appliquée qu'à partir d'un système à 6 tronçons (2 en zone 1, 1 en zone 2, 2 en zone 3, 1, en zone 4) sous peine de se trouver réduit de temps en temps à une zone 1 et une zone 3 de longueur nulle.

Le tableau 3 présente un séquençage complet de lit mobile simulé à contre courant et à débit de recyclage constant à 8 colonnes, dans le cas particulier où l'on choisit de conserver le temps de cycle du lit mobile simulé à contre courant conventionnel .

- Dans un second mode de réalisation particulier, on se place dans le cas où $Q_c < Q_4$. En vertu du tableau 2 on voit que la seule contrainte impérative est $Q_c > S$, ainsi lorsque l'on a $Q_4 > Q_c > S$, $Q_c + K = Q_4$ avec $K < 0$ la suite d'inégalités ④ devient ④ bis :

$$S \geq R \Rightarrow SK \leq RK \Rightarrow Q_4^2 + (S + R + K)Q_4 + S(K + R) \leq Q_4^2 + (S + R + K)Q_4 + R(K + S)$$

| T | Zone 1 | Zone 2 | Zone 3 | Zone 4 |
|---|---|---|---|---|
| $0$ à $T_1^8$ | entrée$C_1$ sortie$C_2$ | entrée$C_3$ sortie$C_4$ | entrée$C_5$ sortie$C_6$ | entrée$C_7$ sortie$C_8$ |
| $T_1^8$ à $T_1^4$ | entrée$C_2$ sortie$C_2$ | entrée$C_3$ sortie$C_4$ | entrée$C_5$ sortie$C_6$ | entrée$C_7$ sortie$C_1$ |
| $T_1^4$ à $T_1^6$ | entrée$C_2$ sortie$C_2$ | entrée$C_3$ sortie$C_5$ | entrée$C_6$ sortie$C_6$ | entrée$C_7$ sortie$C_1$ |
| $T_1^6$ à $T_1^2$ | entrée$C_2$ sortie$C_2$ | entrée$C_3$ sortie$C_5$ | entrée$C_6$ sortie$C_7$ | entrée$C_8$ sortie$C_1$ |
| $T_1^2$ à $T_2^1$ | entrée$C_2$ sortie$C_3$ | entrée$C_4$ sortie$C_5$ | entrée$C_6$ sortie$C_7$ | entrée$C_8$ sortie$C_1$ |
| $T_2^1$ à $T_2^5$ | entrée$C_3$ sortie$C_3$ | entrée$C_4$ sortie$C_5$ | entrée$C_6$ sortie$C_7$ | entrée$C_8$ sortie$C_2$ |
| $T_2^5$ à $T_2^7$ | entrée$C_3$ sortie$C_3$ | entrée$C_4$ sortie$C_6$ | entrée$C_7$ sortie$C_7$ | entrée$C_8$ sortie$C_2$ |
| $T_2^7$ à $T_2^3$ | entrée$C_3$ sortie$C_3$ | entrée$C_4$ sortie$C_6$ | entrée$C_7$ sortie$C_8$ | entrée$C_1$ sortie$C_2$ |
| $T_2^3$ à $T_3^2$ | entrée$C_3$ sortie$C_4$ | entrée$C_5$ sortie$C_6$ | entrée$C_7$ sortie$C_8$ | entrée$C_1$ sortie$C_2$ |
| $T_3^2$ à $T_3^6$ | entrée$C_4$ sortie$C_4$ | entrée$C_5$ sortie$C_6$ | entrée$C_7$ sortie$C_8$ | entrée$C_1$ sortie$C_3$ |
| $T_3^6$ à $T_3^8$ | entrée$C_4$ sortie$C_4$ | entrée$C_5$ sortie$C_7$ | entrée$C_8$ sortie$C_8$ | entrée$C_1$ sortie$C_3$ |
| $T_3^8$ à $T_3^4$ | entrée$C_4$ sortie$C_4$ | entrée$C_5$ sortie$C_7$ | entrée$C_8$ sortie$C_1$ | entrée$C_2$ sortie$C_3$ |
| $T_3^4$ à $T_4^3$ | entrée$C_4$ sortie$C_5$ | entrée$C_6$ sortie$C_7$ | entrée$C_8$ sortie$C_1$ | entrée$C_2$ sortie$C_3$ |
| $T_4^3$ à $T_4^7$ | entrée$C_5$ sortie$C_5$ | entrée$C_6$ sortie$C_7$ | entrée$C_8$ sortie$C_1$ | entrée$C_2$ sortie$C_4$ |
| $T_4^7$ à $T_4^1$ | entrée$C_5$ sortie$C_5$ | entrée$C_6$ sortie$C_8$ | entrée$C_1$ sortie$C_1$ | entrée$C_2$ sortie$C_4$ |
| $T_4^1$ à $T_4^5$ | entrée$C_5$ sortie$C_5$ | entrée$C_6$ sortie$C_8$ | entrée$C_1$ sortie$C_2$ | entrée$C_3$ sortie$C_4$ |
| $T_4^5$ à $T_5^4$ | entrée$C_5$ sortie$C_6$ | entrée$C_7$ sortie$C_8$ | entrée$C_1$ sortie$C_2$ | entrée$C_3$ sortie$C_4$ |
| $T_5^4$ à $T_5^8$ | entrée$C_6$ sortie$C_6$ | entrée$C_7$ sortie$C_8$ | entrée$C_1$ sortie$C_2$ | entrée$C_3$ sortie$C_5$ |
| $T_5^8$ à $T_5^2$ | entrée$C_6$ sortie$C_6$ | entrée$C_7$ sortie$C_1$ | entrée$C_2$ sortie$C_2$ | entrée$C_3$ sortie$C_5$ |
| $T_5^2$ à $T_5^6$ | entrée$C_6$ sortie$C_6$ | entrée$C_7$ sortie$C_1$ | entrée$C_2$ sortie$C_3$ | entrée$C_4$ sortie$C_5$ |
| $T_5^6$ à $T_6^5$ | entrée$C_6$ sortie$C_7$ | entrée$C_8$ sortie$C_1$ | entrée$C_2$ sortie$C_3$ | entrée$C_4$ sortie$C_5$ |
| $T_6^5$ à $T_6^1$ | entrée$C_7$ sortie$C_7$ | entrée$C_8$ sortie$C_1$ | entrée$C_2$ sortie$C_3$ | entrée$C_4$ sortie$C_6$ |
| $T_6^1$ à $T_6^3$ | entrée$C_7$ sortie$C_7$ | entrée$C_8$ sortie$C_2$ | entrée$C_3$ sortie$C_3$ | entrée$C_4$ sortie$C_6$ |
| $T_6^3$ à $T_6^7$ | entrée$C_7$ sortie$C_7$ | entrée$C_8$ sortie$C_2$ | entrée$C_3$ sortie$C_4$ | entrée$C_5$ sortie$C_6$ |
| $T_6^7$ à $T_7^6$ | entrée$C_7$ sortie$C_8$ | entrée$C_1$ sortie$C_2$ | entrée$C_3$ sortie$C_4$ | entrée$C_5$ sortie$C_6$ |
| $T_7^6$ à $T_7^2$ | entrée$C_8$ sortie$C_8$ | entrée$C_1$ sortie$C_2$ | entrée$C_3$ sortie$C_4$ | entrée$C_5$ sortie$C_7$ |
| $T_7^2$ à $T_7^4$ | entrée$C_8$ sortie$C_8$ | entrée$C_1$ sortie$C_3$ | entrée$C_4$ sortie$C_4$ | entrée$C_5$ sortie$C_7$ |
| $T_7^4$ à $T_7^8$ | entrée$C_8$ sortie$C_8$ | entrée$C_1$ sortie$C_3$ | entrée$C_4$ sortie$C_5$ | entrée$C_6$ sortie$C_7$ |
| $T_7^8$ à $8T$ | entrée$C_8$ sortie$C_1$ | entrée$C_2$ sortie$C_3$ | entrée$C_4$ sortie$C_5$ | entrée$C_6$ sortie$C_7$ |

soit

$$(Q_4 + S) \cdot (Q_4 + K + R) \leq (Q_4 + R)(Q_4 + K + S) \Rightarrow T_1^2 \leq T_1^6$$

Pour la première ligne on démontre $T_1^2 < T_1^6 < T_1^4 < T_1^8$

Dans le cas, selon le second mode, où $Q_4 > Q_c > S$, un tableau différent de séquençage serait établi sachant que dans ce cas, la vanne qui permute la première est celle d'extrait, puis celle de raffinat, puis celle de charge et enfin celle de solvant.

Sachant que la pompe de recyclage est solidaire du tronçon 8, il faut alors prendre garde aux faits suivants :

- La pompe passe de zone 4 en zone 3 à $T_2^7$ et non $T_2^3$ puisqu'en cet instant la sortie de raffinat passe de la sortie de $C_7$ à la sortie de $C_8$.

- La pompe passe de zone 3 en zone 2 à $T_4^7$ et non $T_4^5$ puisque l'injection de charge passe de l'entrée $C_8$ à l'entrée $C_1$ en cet instant.

- La pompe passe effectivement de zone 2 en zone 1 à $T_6^7$.

- Dans le cas particulier que l'on traite, le débit moyen de recirculation du lit mobile simulé conventionnel est

$$Q_M = Q_4 + \frac{(2S-E+R)}{4}$$

La valeur de $Q_c$ peut être fixée de manière arbitraire (à condition d'être supérieure au débit de solvant). Cependant si :

* Si $Q_c$ est largement inférieur au débit moyen $Q_M$ du lit mobile simulé dont on veut améliorer le fonctionnement, le temps de cycle va devenir très grand, certains $T_j^i$ seront beaucoup plus forts que d'autres, on devra avoir un nombre de tronçons très important dans certaines zones sous peine de voir ces zones disparaître. De plus, les débits $Q_k^p$ devenant très différents des débits $Q_k$ il ne sera plus possible d'admettre que la résistance au transfert reste identique du lit mobile simulé conventionnel au lit mobile simulé à débit de recyclage constant.

* Si $Q_c$ est très largement supérieur au débit moyen $Q_M$ du lit mobile simulé conventionnel, les pertes de charge dans l'unité augmenteront considérablement, la hauteur équivalente au plateau théorique augmentant, la longueur totale de la colonne devra être allongée si l'on veut garder une qualité de séparation donnée.

* En pratique, de manière avantageuse, si l'on a à améliorer le fonctionnement d'une unité existante, on choisira $Q_c$ tel que $Q_c$ soit compris entre $Q_4 + S$ et la plus grande des deux valeurs $Q_4$ ou $S$, $Q_4$ étant le plus faible des débits de recyclage d'un lit mobile simulé conventionnel ; en effet la pompe de recyclage est dimensionnée pour véhiculer au maximum le débit $Q_1 = Q_4 + S$ et au minimum le débit $Q_4$. Dans le cas d'une unité neuve on dispose de plus de liberté. On essaiera en général de minimiser la quantité de phase fixe mise en oeuvre et l'on ne descendra généralement pas en dessous de 20 secondes pour l'intervalle de permutation sous peine de perdre une précision raisonnable sur cette valeur (les mouvements des vannes gérant les circuits d'introduction ou prélèvement n'étant pas instantanés).

On se propose maintenant de calculer $Q_c$ de telle manière que la durée totale du cycle soit conservée entre le lit mobile simulé à contre courant conventionnel et le lit mobile simulé à contre courant à débit de recyclage constant. De cette manière, toutes les règles de l'art concernant le dimensionnement sont strictement conservées. On considère cette situation comme optimale mais non obligatoire.

Dans le cas du lit mobile simulé à contre courant à quatre zones et huit colonnes, le calcul de la valeur de $Q_c$ optimal se fera en posant :

$$8.T = T_8^1 = T_8^3 = T_8^5 = T_8^7 \qquad ⑤$$

On éliminera ainsi les termes en $T_{i+1}^j$ et T pour arriver à une équation explicite en $Q_c$ et l'on choisira la racine la plus proche de $Q_M$.

Pour les zones 1, 2, 3 et 4 on écrit respectivement les quatre séries d'équations d'identification des volumes élués en sortie de zone entre les 2 types de lit mobile simulé.

On arrive pour les quatre zones à une seule et même équation explicite du quatrième degré en $Q_c$. En travaillant sur les séries d'équations de la zone 3 ou de la zone 4, on arrive directement à la forme suivante :

$$8T(Q_4 + S - Q_c) = RT_2^7 - Ch\, T_4^7 + ET_6^7$$

avec :

$$T_2^7 = 2T \cdot (Q_4 + R) / (Q_c + R)$$

$$T_4^7 = (4 \cdot T \cdot (Q_4 + S - E) - RT_2^7) / (Q_c - Ch)$$

$$T_6^7 = (6T \cdot (Q_4 + S) - RT_2^7 + Ch\, T_4^7) / (Q_c + E)$$

ce qui conduit après élimination des $T_{i+1}^j$ et de T à

$$4Q_c^4 - 4Q_4 Q_c^3 - [Q_4(2S + R - E) + 3R^2 - 2ChS + ES + 2ECh]Q_c^2 +$$
$$[(Q_4 + S)(2RCh + ECh - RE) - 2RECh]\,Q_c + R.E.Ch\,(Q_4 + S) = 0$$

Dans le cas plus général du problème à quatre zones et n colonnes, on arrive, si $C_K$ représente le nombre de colonnes en zone K, à la forme :

$$nT(Q_4 + S - Q_c) = RT_{C4}^{n-1} - Ch\, T_{C4+C3}^{n-1} + ET_{C4+C3+C2}^{n-1}$$

avec:

$$T_{C4}^{n-1} = C_4 T (Q_4 + R) / (Q_c + R)$$

$$T_{C4+C3}^{n-1} = [(C4 + C3)(Q_4 + S - E) T - RT_{C4}^{n-1}] / (Q_c - Ch)$$

$$T_{C4+C3+C2}^{n-1} = [(C_4 + C_3 + C_2)(Q_4 + S) T - RT_{C4}^{n-1} + Ch\, T_{C4+C3}^{n-1}] / (Q_c + E)$$

soit exprimée de manière explicite en $Q_C$ :

$$nQ_c^4 - nQ_4 Q_c^3 - [(Q_4 + S - E)(nR - (C_1 + C_2)Ch) + C_1 E(Q_4 + S) - C_4 R(Q_4 + R) + nRCh]Q_c^2$$
$$+ [(C_1 + C_2) RCh (Q_4 + S - E) - C_1 E(R - Ch)(Q_4 + S)]\,Q_c + C_1 RECh\,(Q_4 + S) = 0$$

A partir de ce mode de mise en oeuvre de lit mobile simulé à contre courant à quatre zones, il est facile d'extrapoler la marche à suivre pour un lit mobile simulé à cinq zones ; le débit de recyclage moyen du lit mobile simulé conventionnel devient :

$$Q_M = \frac{C_1(Q_4 + S) + C_5(Q_4 + S - E - R - I) + C_2(Q4 + S - E) + C_3(Q_4 + R) + C_4 Q_4}{n}$$

Le débit d'extrait est représenté ici par E + RI, (RI étant le reflux interne) de manière à garder toutes les valeurs de débits dans les zones 1, 2, 3 et 4 identiques au cas du lit mobile simulé à quatre zones.
Pour un cas concret, si $Q_5$ est le débit dans la zone 5 qui vient se placer entre les zones 1 et 2, la démarche sera la suivante :

- on examinera si l'on a

$$Q_1 > Q_3 > Q_2 > Q_5 > Q_4 \text{ ou } Q_1 > Q_3 > Q_2 > Q_4 > Q_5$$

Dans le premier cas, l'ordre de permutations sera : 1) Vanne d'injection de solvant, 2) vanne d'injection de reflux interne, 3) vanne d'injection de charge, 4) vanne de prélèvement de raffinat, 5) vanne de prélèvement d'extrait. Dans le second cas, les deux premières opérations seront inversées par rapport à la séquence ci-dessous.

- On établira un tableau de séquençage équivalent au tableau 3 et un tableau temps débit respectivement pour les lits mobiles simulés conventionnel et à débit de recyclage constant analogues aux tableaux 1 et 2.

- On écrira ensuite 5 séries d'équations (1 par zone) donnant $T_j^i$ en fonction de $Q_4$, S, E, RI, Ch, R et T, où RI représente le débit de reflux interne.

- Les cinq séries d'équations conduiront à 1 seule et même équation explicite du 5ème degré en $Q_c$ et la valeur physique de $Q_c$ sera proche de $Q_M$.

Si l'on écrit le système à cinq zones sous la forme suivante :

$$Z_1 : Q_4 + S \qquad Z_5 : Q_4 + S - E - RI \qquad Z_2 : Q_4 + S - E \qquad Z_3 : Q_4 + R \qquad Z_4 : Q_4$$

$$S \qquad\qquad E + RI \qquad\qquad RI \qquad\qquad Ch \qquad\qquad RI$$

on arrive à l'équation du 5éme degré suivante :

$$\alpha Q_c^5 + \beta Q_c^4 + \gamma Q_c^3 + \delta Q_c^2 + \varepsilon Q_c + \varphi = 0$$

A titre indicatif, on donne la valeur de quelques coefficients :

$$\alpha = n \; ; \; \beta = n \, (Q_4 + RI)$$

$$\gamma = n \,.\, (Q_4 S + Ch^2 - E.R + ES + RS) + (C_4 + C_3 + C_2) \,.\, (S - E - RI) \,.\, RI$$
$$- (C_4 + C_3).E.Ch - (C_2 + C_5).(Q_4 + S).Ch - (C_5 + C_1).Q_4.RI - C_4.R.(Q_4 + R)$$

$$\varphi = Ch.R. \{(Q_4 + S).[E.RI.(C_5 + C_1) - Ch \, (RI.(n - C_1) + C_4 + C_3)] +$$
$$E.[Ch.(C_4 + C_3) + RI \, (C_4 + C_3 + C_2) \,.(E+RI)]\}$$

Lorsqu'un cas concret se présente, la racine physique est trouvée facilement par la méthode Newton initialisée par $Q_M$.
Il existe évidemment des variantes de lit mobile simulé à six zones ou plus; par exemple :

Z$_1$  Z$_2$  Z$'_1$  Z$'_2$  Z$_3$  Z$_4$

Solvant 1   Extrait 1   Solvant 2   Extrait 2   Charge   Raffinat

La démarche sera à chaque fois équivalente à ce qui a été traité plus haut. Cependant, il apparaît très fastidieux d'écrire les équations correspondantes du 6ème ou du 7ème degré pour arriver à une solution optimale très proche de $Q_M$. On imposera directement $Q_c = Q_M$ et l'on calculera un tableau des temps de permutation tel que le temps total de cycle soit légèrement différent du temps total de cycle du lit mobile simulé conventionnel.

Selon une deuxième variante de réalisation, à co-courant simulé à débit de recyclage constant, la solution stricte pour un lit à 4 zones est alors la suivante :

les débits $Q_1$, $Q_2$, $Q_3$, $Q_4$ sont cette fois orientés de la droite vers la gauche et , par convention on leur attribuera une valeur algébrique négative, alors que les débits S,E,Ch, et R garderont une valeur algébrique positive; cette manière de procéder permet de conserver la structure des séries d'équations lorsque l'on passe du contre-courant au co-courant simulé.

Cette fois, on se place dans le cas où le débit de raffinat est le plus grand des quatre débits d'entrée-sortie, tandis que le débit d'extrait est le plus faible :

$$Q_3 \geq Q_1 > Q_2 \geq Q_4 \begin{cases} Ch \geq E \Rightarrow Q_3 \geq Q_1 \Leftarrow S \leq R \\ R \geq Ch \Rightarrow Q_2 \geq Q_4 \Leftarrow E \leq S \end{cases}$$

- Dans un premier mode de réalisation, on se place dans le cas où :

② $Q_c > Q_4$ , c'est à dire $|Q_4| \geq |Q_c|$ puisque suivant notre convention
$Q_4 = -|Q_4|$ et donc $|Q_4| \geq |Q_2| > |Q_1| \geq |Q_3|$ . D'après le tableau 2 pour que tous les débits dans les zones restent orientés dans le même sens, il faudra également satisfaire l'inégalité $|Q_c| \geq R$.

On exprime alors $Q_c$ sous la forme $Q_c = Q_4 + K$ et il vient

$$Q_c + R > Q_c + S > Q_c + S - E > Q_c \qquad ③ \, bis$$

On peut alors établir l'ordre de séquençage des vannes de manière à calculer $[T_j^i]$. On procède de manière exactement analogue à ce qui a été exposé plus haut dans le cas du contre courant simulé, en prenant toutefois garde que par rapport à ce cas, l'entrée et la sortie des zones sont inversées, et que c'est bien à la sortie de chaque zone que l'on pose l'égalité des volumes élués entre un cocourant simulé conventionnel et un cocourant simulé à débit de recyclage constant. Pour la première ligne du tableau de séquençage, on peut montrer que :

$$T_1^5 > T_1^1 > T_1^3 > T_1^7$$

Plus généralement, quelle que soit la position relative de la pompe par rapport aux points d'introduction et de prélèvement au cours du cycle, la vanne en sortie de zone 4 permute la première (prélèvement de Raffinat) suivie de la vanne en sortie de zone 2 (prélèvement d'extrait) puis la vanne en sortie de zone 1 (injection de solvant) enfin la dernière vanne à permuter est celle en sortie de zone 3 (injection de charge). Une fois encore l'invention ne peut être appliquée qu'à partir d'un système à 6 tronçons (2 en zone 1, 1 en zone 2, 2 en zone 3, 1 en zone 4) sous peine de se trouver réduit de temps en temps à une zone 1 et une zone 3 de longueur nulle.

Le tableau 4 présente un séquençage complet de co-courant simulé.à débit de recyclage constant à 8 colonnes.

- Dans un second mode de réalisation, on se place dans le cas où $Q_c < Q_4$. Dans ce cas, la suite d'inégalités ④ serait inversée et il faudrait adopter un séquençage inverse des vannes.

Sachant que la pompe de recyclage est solidaire du tronçon 8, il faut, comme dans le cas du contre courant simulé repérer les moments où la pompe de recyclage change effectivement de zone ; lorsque l'on travaille avec $|Q_c|<|Q_4|$,

- la pompe passe de zone 4 en zone 3 à $T_2^8$ et non $T_2^6$
- la pompe passe de zone 3 en zone 2 à $T_4^8$
- la pompe passe de zone 2 en zone 1 à $T_6^8$ .et non $T_6^2$
- le point n° 4 exposé dans le cas du C.C.S. reste valable avec la seule différence que la valeur absolue de $Q_c$ doit cette fois être supérieure au débit de raffinat qui se trouve être le plus fort des débits d'entrée sortie.

On se propose maintenant de calculer $Q_c$ de telle manière que la durée totale du cycle soit conservée entre le cocourant simulé conventionnel et le cocourant simulé à débit de recyclage constant. De cette manière toutes les règles de l'art concernant le dimensionnement sont strictement conservées. On considère cette situation comme optimale mais non obligatoire.

Dans le cas du cocourant simulé à 4 zones et huit colonnes, le calcul de la valeur de $Q_c$ optimal se fera en posant :

$$8.T \ = \ T_8^8 \ = \ T_8^6 \ = \ T_4^4 \ = \ T_8^2 \qquad ⑤\,bis$$

On éliminera ainsi les termes en $T_{i+1}^i$ et T pour arriver à une équation explicite en $Q_c$ et l'on choisira la racine la plus proche de $Q_M$.

TABLEAU 4 : SÉQUENCAGE DU COCOURANT A RECYCLAGE CONSTANT

| T | Zone 1 | Zone 2 | Zone 3 | Zone 4 |
|---|---|---|---|---|
| 0 à $T_1^3$ | entrée $C_2$ sortie $C_1$ | entrée $C_4$ sortie $C_3$ | entrée $C_6$ sortie $C_5$ | entrée $C_8$ sortie $C_7$ |
| $T_1^7$ à $T_1^3$ | entrée $C_2$ sortie $C_1$ | entrée $C_4$ sortie $C_3$ | entrée $C_7$ sortie $C_5$ | entrée $C_8$ sortie $C_8$ |
| $T_1^3$ à $T_1^1$ | entrée $C_3$ sortie $C_1$ | entrée $C_4$ sortie $C_4$ | entrée $C_7$ sortie $C_5$ | entrée $C_8$ sortie $C_8$ |
| $T_1^1$ à $T_1^5$ | entrée $C_3$ sortie $C_2$ | entrée $C_4$ sortie $C_4$ | entrée $C_7$ sortie $C_5$ | entrée $C_1$ sortie $C_8$ |
| $T_1^5$ à $T_2^8$ | entrée $C_3$ sortie $C_2$ | entrée $C_5$ sortie $C_4$ | entrée $C_7$ sortie $C_6$ | entrée $C_1$ sortie $C_8$ |
| $T_2^8$ à $T_2^4$ | entrée $C_3$ sortie $C_2$ | entrée $C_5$ sortie $C_4$ | entrée $C_8$ sortie $C_6$ | entrée $C_1$ sortie $C_1$ |
| $T_2^4$ à $T_2^2$ | entrée $C_4$ sortie $C_2$ | entrée $C_5$ sortie $C_5$ | entrée $C_8$ sortie $C_6$ | entrée $C_1$ sortie $C_1$ |
| $T_2^2$ à $T_2^6$ | entrée $C_4$ sortie $C_3$ | entrée $C_5$ sortie $C_5$ | entrée $C_8$ sortie $C_6$ | entrée $C_2$ sortie $C_1$ |
| $T_2^6$ à $T_3^1$ | entrée $C_4$ sortie $C_3$ | entrée $C_6$ sortie $C_5$ | entrée $C_8$ sortie $C_7$ | entrée $C_2$ sortie $C_1$ |
| $T_3^1$ à $T_3^5$ | entrée $C_4$ sortie $C_3$ | entrée $C_6$ sortie $C_5$ | entrée $C_1$ sortie $C_7$ | entrée $C_2$ sortie $C_2$ |
| $T_3^5$ à $T_3^3$ | entrée $C_5$ sortie $C_3$ | entrée $C_6$ sortie $C_6$ | entrée $C_1$ sortie $C_7$ | entrée $C_2$ sortie $C_2$ |
| $T_3^3$ à $T_3^7$ | entrée $C_5$ sortie $C_4$ | entrée $C_6$ sortie $C_6$ | entrée $C_1$ sortie $C_7$ | entrée $C_3$ sortie $C_2$ |
| $T_3^7$ à $T_4^2$ | entrée $C_5$ sortie $C_4$ | entrée $C_7$ sortie $C_6$ | entrée $C_1$ sortie $C_8$ | entrée $C_3$ sortie $C_2$ |
| $T_4^2$ à $T_4^6$ | entrée $C_5$ sortie $C_4$ | entrée $C_7$ sortie $C_6$ | entrée $C_2$ sortie $C_8$ | entrée $C_3$ sortie $C_3$ |
| $T_4^6$ à $T_4^4$ | entrée $C_6$ sortie $C_4$ | entrée $C_7$ sortie $C_7$ | entrée $C_2$ sortie $C_8$ | entrée $C_3$ sortie $C_3$ |
| $T_4^4$ à $T_4^8$ | entrée $C_6$ sortie $C_5$ | entrée $C_7$ sortie $C_7$ | entrée $C_2$ sortie $C_1$ | entrée $C_4$ sortie $C_3$ |
| $T_4^8$ à $T_5^3$ | entrée $C_6$ sortie $C_5$ | entrée $C_8$ sortie $C_7$ | entrée $C_2$ sortie $C_1$ | entrée $C_4$ sortie $C_3$ |
| $T_5^3$ à $T_5^7$ | entrée $C_6$ sortie $C_5$ | entrée $C_8$ sortie $C_7$ | entrée $C_3$ sortie $C_1$ | entrée $C_4$ sortie $C_4$ |
| $T_5^7$ à $T_5^5$ | entrée $C_7$ sortie $C_5$ | entrée $C_8$ sortie $C_8$ | entrée $C_3$ sortie $C_1$ | entrée $C_4$ sortie $C_4$ |
| $T_5^5$ à $T_5^1$ | entrée $C_7$ sortie $C_6$ | entrée $C_8$ sortie $C_8$ | entrée $C_3$ sortie $C_3$ | entrée $C_5$ sortie $C_4$ |
| $T_5^1$ à $T_6^4$ | entrée $C_7$ sortie $C_6$ | entrée $C_1$ sortie $C_8$ | entrée $C_3$ sortie $C_2$ | entrée $C_5$ sortie $C_4$ |
| $T_6^4$ à $T_6^8$ | entrée $C_7$ sortie $C_6$ | entrée $C_1$ sortie $C_8$ | entrée $C_4$ sortie $C_2$ | entrée $C_5$ sortie $C_5$ |
| $T_6^8$ à $T_6^6$ | entrée $C_8$ sortie $C_6$ | entrée $C_1$ sortie $C_1$ | entrée $C_4$ sortie $C_2$ | entrée $C_5$ sortie $C_5$ |
| $T_6^6$ à $T_6^2$ | entrée $C_8$ sortie $C_7$ | entrée $C_1$ sortie $C_1$ | entrée $C_4$ sortie $C_2$ | entrée $C_6$ sortie $C_5$ |
| $T_6^2$ à $T_7^5$ | entrée $C_8$ sortie $C_7$ | entrée $C_2$ sortie $C_1$ | entrée $C_4$ sortie $C_3$ | entrée $C_6$ sortie $C_5$ |
| $T_7^5$ à $T_7^1$ | entrée $C_8$ sortie $C_7$ | entrée $C_2$ sortie $C_1$ | entrée $C_5$ sortie $C_3$ | entrée $C_6$ sortie $C_6$ |
| $T_7^1$ à $T_7^7$ | entrée $C_1$ sortie $C_7$ | entrée $C_2$ sortie $C_2$ | entrée $C_5$ sortie $C_3$ | entrée $C_6$ sortie $C_6$ |
| $T_7^7$ à $T_7^3$ | entrée $C_1$ sortie $C_8$ | entrée $C_2$ sortie $C_2$ | entrée $C_5$ sortie $C_3$ | entrée $C_7$ sortie $C_6$ |
| $T_7^3$ à 8T | entrée $C_1$ sortie $C_8$ | entrée $C_3$ sortie $C_2$ | entrée $C_5$ sortie $C_4$ | entrée $C_7$ sortie $C_6$ |

Pour les zones 1, 2, 3 et 4, on écrit respectivement les quatre séries d'équations d'identification des volumes élués en sortie de zone entre les deux types de lit mobile simulé.

On arrive, pour les quatre zones, à une seule et même équation explicite du quatrième degré en $Q_c$. En travaillant sur les séries d'équations de la zone 3 ou de la zone 4, on arrive directement à la forme suivante :

$$8T(Q_4 + S - Q_c) = RT_2^8 - Ch\,T_4^8 + ET_6^8$$

avec:

$$T_2^8 = 2T \cdot Q_4 / Q_c$$

$$T_4^8 = (4 \cdot T \cdot (Q_4 + R) - RT_2^8)/Q_c$$

$$T_6^8 = (6T \cdot (Q_4 + S\text{-}E) - RT_2^8 + Ch\,T_4^8)/Q_c$$

ce qui conduit après élimination des $T_{i+1}^j$ et de T à

$$4Q_c^4 - 4 \cdot (Q_4 + S) \cdot Q_c^3 + [Q_4(2S - R + E) - 2\,ChR + 3ES - 3\,E^2]\,Q_c^2$$
$$+ [Q_4(RCh + 2ECh - RE) + 2RECh]\,Q_c - R.E.Ch\,Q_4 = 0$$

Dans le cas plus général du problème à 4 zones et n colonnes, on arrive, si $C_K$ représente le nombre de colonnes en zone K, à la forme :

$$nT(Q_4 + S - Q_c) = RT_{C4}^n - Ch\,T_{C4 + C3}^n + ET_{C4 + C3 + C2}^n$$

avec :

$$T_{C4}^n = C_4\,T\,Q_4 / Q_c$$

$$T_{C4 + C3}^n = [(C_4 + C_3)(Q_4 + R)\,T - RT_{C4}^n]/Q_c$$

$$T_{C4 + C3 + C2}^n = [(C_4 + C_3 + C_2)(Q_4 + S - E)\,T - RT_{C4}^n + ChT_{C4 + C3}^n]/Q_c$$

soit exprimée de manière explicite en Qc :

$$nQ_c^4 - n \cdot (Q_4 + S) \cdot Q_c^3 - [E \cdot (n - C_1) \cdot (Q_4 + S - E) - Ch(C_4 + C_3)(Q_4 + R) + C_4\,R$$
$$Q_4]\,Q_c^2 + [C_4\,R\,Q_4(C_h - E) + ECh\,(C_4 + C_3)(Q_4 + R)]\,Q_c - C_4 RECh\,Q_4 = 0$$

L'invention sera mieux comprise à partir des exemples suivants, purement illustratifs.

**Exemple n° 1**

Soit un lit mobile simulé conventionnel à contre-courant et à quatre zones comprenant chacune 2 tronçons dont les débits respectifs en unités arbitraires sont les suivants : S = 2, E = 1,5, Ch = 1, R = 1,5, Q1 = 8, Q2 = 6,5, Q3 = 7,5, Q4 = 6 et dont la période est 100 secondes.
L'équation du quatrième degré devient :

$$4Q_c^4 - 24Q_c^3 - 32,75\,Q_c^2 + 13,5\,Q_c + 18 = 0$$

La solution doit être proche de

$$Q_M = Q_4 + \frac{(2S + R - E)}{4} = 7$$

La racine physique a pour valeur $Q_c = 7,077$. Cette valeur de débit est adoptée pour la pompe de recyclage. Cette pompe est en zone 4 jusqu'à $T_2^7$, en zone 3 jusqu'à $T_4^7$ et en zone 2 jusqu'à $T_6^7$ et en zone 1 jusqu'à la fin du cycle.

Le tableau 5 donnant les temps de permutation est alors le suivant :

| $T_1^2 = 88,13$ s | $T_1^4 = 85,79$ s | $T_1^6 = 87,44$ s | $T_1^8 = 84,78$ s |
|---|---|---|---|
| $T_2^3 = 176,54$ | $T_2^5 = 171,57$ | $T_2^7 = 174,89$ | $T_2^1 = 169,56$ |
| $T_3^4 = 282,14$ | $T_3^6 = 277,72$ | $T_3^8 = 280,88$ | $T_3^2 = 275,73$ |
| $T_4^5 = 387,36$ | $T_4^7 = 384,68$ | $T_4^1 = 386,59$ | $T_4^3 = 383,31$ |
| $T_5^6 = 480,64$ | $T_5^8 = 476,53$ | $T_5^2 = 479,45$ | $T_5^4 = 474,75$ |
| $T_6^7 = 573,91$ | $T_6^1 = 568,37$ | $T_6^3 = 572,30$ | $T_6^5 = 565,97$ |
| $T_7^8 = 686,96$ | $T_7^2 = 683,44$ | $T_7^4 = 685,97$ | $T_7^6 = 681,82$ |
| $T_8^1 = 800$ | $T_8^3 = 800$ | $T_8^5 = 800$ | $T_8^7 = 800$ |

Les volumes élués par période sont de 800 en zone 1, 650 en zone 2, 750 en zone 3 et 600 en zone 4, quelle que soit la période de permutation durant le cycle.

On remarquera au passage que le débit moyen pondéré par les temps sur l'ensemble du système est encore égal à 7 :

$$\frac{T_2^7(Q_c+1) + (T_4^7-T_2^7)(Q_c-0,5)+(T_6^7-T_4^7)(Q_c+0,5)+(8T-T_6^7)(Q_c-1)}{8T}$$

Par contre, les débits moyens sur chacun des tronçons ne sont pas tous identiques. On peut remarquer que $T_1^2$, $T_1^4$, $T_1^6$ et $T_1^8$ ou plus généralement les intervalles d'une même configuration restent proches les uns des autres, l'écart maximum est observé entre $T_6^7$ et $T_6^5$ soit 8 secondes ; on peut donc faire permuter les quatre circuits en même temps sans que les volumes élues ($VEZ_i$) exprimés en unités arbitraires de volume soient différents de plus de 2,2 % de ceux attendus (tableau 6) :

| | VEZ$_1$ | VEZ$_2$ | VEZ$_3$ | VEZ$_4$ |
|---|---|---|---|---|
| T$_1$ = 86,53 s | 785,46 | 655,64 | 742,17 | 612,37 |
| T$_2$ = 173,14 s | 786,16 | 656,24 | 742,85 | 612,94 |
| T$_3$ = 279,11 s | 802,93 | 643,98 | 749,95 | 590,99 |
| T$_4$ = 385,48 s | 805,97 | 646,41 | 752,28 | 593,23 |
| T$_5$ = 477,83 s | 792,09 | 653,56 | 745,91 | 607,39 |
| T$_6$ = 570,13 s | 791,66 | 653,21 | 745,51 | 607,06 |
| T$_7$ = 684,53 s | 809,61 | 638,01 | 752,41 | 580,81 |
| T$_8$ = 800,00 s | 817,04 | 643,86 | 759,31 | 586,14 |
| VALEURS MOYENNES | 798,88 | 648,88 | 748,82 | 598,88 |

Les temps de ce tableau 6 constituent la moyenne ligne par ligne des quatres valeurs données dans le tableau 5.

Les volumes élués moyens étant légèrement inférieurs aux valeurs recherchées, il suffit de faire une correction mineure sur Q$_c$ pour rétablir la situation :

$$Q'c = \frac{7,077 \times 700}{698,86} = 7,0885$$

On changera donc la valeur du débit de recyclage constant de 7,077 à 7,088.

Dans les séparations ou une très grande pureté n'est pas requise telle que glucose-fructose ou normales-isoparaffines ce type de fonctionnement convient. Une vanne unique gérant tous les circuits à la fois peut donc continuer à être employée sur les unités existantes.

Nous avons réalisé comparativement la séparation à 60°C d'une solution 65 % glucose-35 % fructose à 400 g/l de matière sèche dans la même unité chargée avec une résine échangeuse de cations styrène-DVB sous forme calcique telle que DOWEX monosphère ®, l'eau est utilisée comme éluant. Dans le cas du lit mobile simulé conventionnel on obtient une pureté de la fraction glucose de 97,65 % et une pureté de la fraction fructose de 98,05 %.

Dans le cas de la version préférée de l'invention les puretés obtenues sont respectivement 97,85 % et 99,20 %. Dans le cas de la version simplifiée de l'invention où tous les flux sont permutés simultanément, les puretés obtenues sont 95,70 % pour la fraction glucose et 96,15 % pour la fraction fructose. Dans les deux cas d'application de l'invention les temps indiqués ont été arrondis au 1/10ème de seconde le plus proche.

**Exemple n° 2**

Soit un lit mobile simulé conventionnel à co-courant à quatre zones de deux tronçons chacune dont les débits respectifs en unités arbitraires sont les suivants : S = 2,8, E = 1,4, Ch = 1,75, R = 3,15, Q1 = 5,95, Q2 = 7,35, Q3 = 5,6, Q4 = 8,75 ; ( selon notre convention nous noterons Q1=-5,95, Q2 = -7,35, Q3 = -5,6, Q4 = -8,75 ). La période est 100 secondes.

L'équation du quatrième degré devient :

$$4 Q_c^4 + 23,8 Q_c^3 - 38,8325 Q_c^2 - 37,086875 Q_c + 67,528125 = 0$$

La solution doit être proche de

$$Q_M = Q_4 + \frac{(2S+R-E)}{4} = -6,9125$$

La racine physique a pour valeur $Q_c = -7,08773$. Cette valeur de débit est adoptée pour la pompe de recyclage. La matrice des périodes est alors la suivante (tableau 7) :

| $T_1^1 = 138,77$ s | $T_1^3 = 129,23$ s | $T_1^5 = 142,21$ s | $T_1^7 = 123,45$ s |
|---|---|---|---|
| $T_2^2 = 264,56$ | $T_2^4 = 254,34$ | $T_2^6 = 267,75$ | $T_2^8 = 246,91$ |
| $T_3^3 = 344,56$ | $T_3^5 = 337,50$ | $T_3^7 = 346,76$ | $T_3^1 = 332,37$ |
| $T_4^4 = 424,56$ | $T_4^6 = 420,67$ | $T_4^8 = 425,77$ | $T_4^2 = 417,84$ |
| $T_5^5 = 528,80$ | $T_5^7 = 523,11$ | $T_5^1 = 530,68$ | $T_5^3 = 519,30$ |
| $T_6^6 = 632,10$ | $T_6^8 = 626,81$ | $T_6^2 = 633,77$ | $T_6^4 = 622,39$ |
| $T_7^7 = 716,05$ | $T_7^1 = 713,40$ | $T_7^3 = 716,89$ | $T_7^5 = 711,51$ |
| $T_8^8 = 800$ | $T_8^2 = 800$ | $T_8^4 = 800$ | $T_8^6 = 800$ |

Les volumes élués par période sont de 595 en zone 1, 735 en zone 2, 560 en zone 3 et 875 en zone 4.

On a réalisé dans la même unité que celle de l'exemple n° 1, la séparation de la même charge avec le même solvant (de l'eau), en opérant cette fois à cocourant simulé. (Mécaniquement, il suffit d'inverser les connexions d'aspiration et de refoulement de la pompe de recyclage ; on remarquera qu'entre l'exemple n° 1 et l'exemple n°2, le débit de charge a été multiplié par 1,75 alors que le débit de recyclage constant reste sensiblement le même en valeur absolue.) Les puretés obtenues sont respectivement de 92,50% pour la fraction glucose et 92,95%pour la fraction fructose .

Il est constaté que dans l'exemple 1, le plus grand des débits d'entrée sortie est trois fois plus petit que le plus faible des débits de recyclage, ce qui entraine que l'écart relatif maximum observé pour la p$^{eme}$ permutation de circuits différents est

$$(T_2^3 - T_2^1)/T_2^3$$

soit 3,95 % ,il en résultait que pour des séparations où une faible pureté pouvait convenir , il était possible de faire permuter les quatre circuits simultanément. Dans le cas de l'exemple n°2, le plus faible des débits de recyclage n'est même pas deux fois plus grand que le plus fort des débits d'entrée sortie ; il en résulte que l'écart relatif maximum observé pour la p$^{eme}$ permutation de circuits différents est

$$(T_2^8 - T_2^6)/T_2^6$$

soit 7,9 % . Par conséquent, si l'on fait permuter les quatre vannes en même temps il devient tout à fait impossible d'obtenir des puretés supérieures à 90 %, ce qui est inacceptable pour les séparations commerciales. La version de l'invention avec simultanéité de permutations n'est donc applicable au co-courant simulé que lorsque le rapport $Q_M$ / Ch est supérieur à 6, et, faire fonctionner un cocourant simulé dans ces conditions revient à lui faire perdre son avantage sur le contre courant simulé.

## Revendications

1. Procédé de séparation en lit mobile simulé d'une charge d'au moins 2 constituants en présence d'au moins un solvant, dans un dispositif de n tronçons de colonnes chromatographiques définissant au moins 4 zones et au plus z zones comportant une pompe de recyclage d'un mélange de solvant et de constituants située entre les tronçons n et 1 et se trouvant successivement dans chacune des zones au cours d'un cycle, le dispositif de n tronçons de colonnes comportant z.n points d'introduction (entrée) et prélèvement (sortie), tels que au cours du cycle, chacun des z circuits d'introduction et prélèvement se trouve raccordé successivement à chacun des n points d'introduction ou de prélèvement qui lui correspond, le procédé étant caractérisé en ce qu'on fait circuler par la pompe de recyclage un débit $Q_c$ de recyclage dudit mélange sensiblement constant durant le cycle, ce débit $Q_c$ étant supérieur au plus fort des z débits d'entrée-sortie injecté ou prélevé dans le dispositif et on fait permuter tout le long du cycle tous les circuits d'introduction et de prélèvement grâce à des moyens indépendants les uns des autres, de manière que le volume élué à la sortie de chaque zone reste sensiblement constant, zone par zone, entre deux permutations successives tout le long du cycle.

2. Procédé selon la revendication 1, dans lequel on fait permuter indépendamment les uns des autres, tout le long du cycle, chacun des circuits avec un séquençage de temps qui lui est propre, après un intervalle de temps ($T^j_{i+1}$ - $T^{j-1}_i$ ) défini par la relation :

$$0,975 \, T \cdot Qk < (T^j_{i+1} - T^{j-1}_i) \cdot Q^p_k < 1,025 \, T.Q_k$$

ou de façon préférée, défini par la relation

$$0,9975 \, T \cdot Qk < (T^j_{i+1} - T^{j-1}_i) \cdot Q^p_k < 1,0025 \, T.Q_k$$

j étant le tronçon précédant immédiatement le point d'introduction ou prélèvement ; i étant le nombre de fois dont le plus lent des circuits de prélèvement ou d'introduction a permuté depuis le début du cycle, T, $Q_k$ et $Q^p_k$ représentant respectivement l'intervalle de temps constant du lit mobile simulé conventionnel équivalent, le débit constant en zone k du lit mobile simulé conventionnel équivalent, et le débit en zone k du lit mobile simulé à recyclage constant lorsque la pompe se trouve en zone p.

3. Procédé selon la revendication 1 dans lequel on fait permuter simultanément, tout le long du cycle, tous les circuits d'introduction et de prélèvement à des intervalles de temps ($T_{i+1}$ - $T_i$), où i, compris entre 0 et n-1, représente le nombre de fois où l'ensemble des points d'introduction et de prélèvement a déjà permuté depuis le début du cycle, ($T_{i+1}$ - $T_i$) étant défini par la relation suivante :

$$0,975 \, T \cdot Q_M < (T_{i+1} - T_i) . Q_{M_k} < 1,025 \, T \cdot Q_M$$

et de façon préférée par la relation suivante :

$$0,9975 \, T \cdot Q_M < (T_{i+1} - T_i) . Q_{M_k} < 1,0025 \, T \cdot Q_M$$

où T, $Q_M$ et

$$Q_{M_k}$$

représentent respectivement l'intervalle de temps constant du lit mobile simulé conventionnel équivalent ,le débit pondéré moyen dans les zones de séparation du lit mobile simulé conventionnel équivalent, le débit pondéré moyen dans les zones de séparation du lit mobile simulé à recyclage constant lorsque la pompe de recyclage se trouve en zone k.

4. Procédé selon l'une des revendications 1 à 3, dans lequel le débit de recyclage constant est compris entre le plus fort des débits de recyclage du lit mobile simulé conventionnel équivalent et la plus grande des deux valeurs prise parmi le plus faible des débits de recyclage du lit mobile simulé conventionnel équivalent, et le plus fort des débits d'entrée sortie.

5. Procédé selon l'une des revendications 1 à 3, dans lequel le débit de recyclage constant $Q_c$ est sensiblement égal au débit moyen pondéré $Q_M$ du lit mobile simulé conventionnel équivalent.

6. Procédé selon l'une des revendications 1 à 5, dans lequel le lit mobile simulé est à contre-courant.

7. Procédé selon l'une des revendications 1 à 5 dans lequel le lit mobile simulé est à co-courant.

**Claims**

1. A simulated moving bed separation process for a feed comprising at least 2 constituents in the presence of at least one solvent, in an apparatus containing n chromatographic column sections defining at least 4 zones and at most z zones, comprising a recycling pump for a mixture of solvent and constituents located between sections n and 1 and being in each zone successively during the course of one cycle, the apparatus containing n column sections including z.n introduction (inlet) and extraction (outlet) points, such that during a cycle, each of z introduction and extraction circuits is successively connected to each of the n introduction or extraction points corresponding thereto, the process being characterised in that the recycling pump circulates said mixture at a recycle flow rate $Q_c$ which is substantially constant during the cycle, said flow rate $Q_c$ being greater than the highest of the z inlet-outlet flow rates injected or extracted to/from the apparatus, and in that all the introduction and extraction circuits are shifted throughout the cycle using independent means, such that the eluted volume at the outlet to each zone is substantially constant, zone by zone, between two successive shifts throughout the cycle.

2. A process according to claim 1, wherein each circuit is shifted independently throughout the cycle in its own time sequence, after a time interval $(T_{i+1}^j - T_i^{j-1})$ which is defined by the relation:

$$0,975 \, T . Qk < (T_{i+1}^j - T_i^{j-1}) . Q_k^p < 1,025 \, T . Q_k$$

or, preferably, defined by the relation

$$0,9975 \, T . Qk < (T_{i+1}^j - T_i^{j-1}) . Q_k^p < 1,0025 \, T . Q_k$$

where j is the number of the section immediately preceding the introduction or extraction point; i is the number of times which the slowest extraction or introduction circuit has already been shifted since the beginning of the cycle, $T$, $Q_k$ and $Q_k^p$ respectively represent the constant time interval of the equivalent conventional simulated moving bed, the constant flow rate in zone k of the equivalent conventional simulated moving bed and the flow rate in zone k of the constant recycle simulated moving bed when the pump is in zone p.

3. A process according to claim 1, wherein all the introduction and extraction circuits are shifted simultaneously throughout the cycle at a time interval of $(T_{i+1} - T_i)$, where i, which is between 0 and n-1, represents the number of times the assembly of introduction and extraction points have already been shifted since the start of the cycle, $(T_{i+1} - T_i)$ being defined by the relation:

$$0,975 \, T . Q_M < (T_{i+1} - T_i) . Q_{M_k} < 1,025 \, T . Q_M$$

or, preferably, defined by the relation

$$0,9975 \, T . Q_M < (T_{i+1} - T_i) . Q_{M_k} < 1,0025 \, T . Q_M$$

where $T$, $Q_M$ and $Q_{Mk}$ respectively represent the constant time interval of the equivalent conventional simulated moving bed, the weighted average flow rate in the separation zones in the equivalent conventional simulated moving bed, and the weighted average flow rate in the separation zones in the constant recycle simulated moving bed when the recycle pump is in zone k.

4. A process according to any one of claims 1 to 3, wherein the constant recycle flow rate is between the highest recycle flow rate of the equivalent conventional simulated moving bed and the highest of two values of the lowest of the recycle flow rates of the equivalent conventional simulated moving bed and the highest of the inlet-outlet flow rates.

5. A process according to any one of claims 1 to 3, wherein the constant recycle flow rate $Q_c$ is substantially equal to the weighted average flow rate $Q_M$ of the equivalent conventional simulated moving bed.

6. A process according to any one of claims 1 to 5, wherein the simulated moving bed is operated in counter-current mode.

7. A process according to any one of claims 1 to 5, wherein the simulated moving bed is operated in co-current mode.

**Patentansprüche**

1. Verfahren zum Trennen, im beweglichen simulierten Bett, einer Charge aus wenigstens 2 Bestandteilen in Anwesenheit wenigstens eines Lösungsmittels, in einer Vorrichtung aus n Abschnitten chromatographischer Kolonnen, die wenigstens 4 Zonen und höchstens z Zonen bilden und eine Recyclierungspumpe für ein Lösungsmittelgemisch und Bestandteile umfassen und zwischen den Abschnitten n und 1 angeordnet ist und sich nacheinander in jeder der Zonen während eines Zyklus befindet, wobei die Vorrichtung aus n Kolonnenabschnitten z.n Einführungspunkte (Eintritt) und Entnahmepunkte (Austritt) umfaßt, derart, daß während des Zyklus jeder der z Einführungs- und Entnahmekreise nacheinander mit jedem der n Einführungs- oder Entnahmepunkte, der ihm jeweils entspricht, verbunden wird, wobei das Verfahren sich dadurch auszeichnet, daß man über die Recyclierungspumpe einen Recyclierungsdurchsatz $Q_c$ dieses im wesentilchen konstanten Gemisches während des Zyklus zirkulieren läßt, wobei dieser Durchsatz $Q_c$ größer als der Größte der z in die Vorrichtung eingeführten oder aus der Vorrichtung entnommenen Durchsätze ist und daß man längs des Zyklus sämtliche Einführungs- und Entnahmekreise dank voneinander unabhängiger Mitteln permutieren läßt, derart, daß das eluierte Volumen am Austritt jeder Zone im wesentlichen Zone für Zone zwischen zwei aufeinanderfolgenden Permutationen längs des Zyklus konstant bleibt.

2. Verfahren nach Anspruch 1, bei dem man unabhängig voneinander längs des Zyklus jeden der Kreise mit einer Zeitsequenzierung, die ihr eigen ist, nach einem Zeitintervall $(T_{i+1}^{j} - T_i^{j-1})$ permutieren läßt, das definiert ist durch die Beziehung:

$$0,975 \, T \cdot Qk < (T_{i+1}^{j} - T_i^{j-1}) \cdot Q_k^{p} < 1,025 \, T \cdot Q_k$$

oder bevorzugt definiert ist durch die Beziehung

$$0,9975 \, T \cdot Qk < (T_{i+1}^{j} - T_i^{j-1}) \cdot Q_k^{p} < 1,0025 \, T \cdot Q_k$$

wobei j der unmittelbar dem Einführungs- oder Entnahmepunkt vorhergehende Abschnitt ist; i die Anzahl von Malen ist, während der langsamste der Einführungs- oder Entnahmekreise seit Beginn des Zyklus permutiert hat, $T$, $Q_k$ und $Q^p_k$ jeweils das konstante Zeitintervall des simulierten konventionellen äquivalenten beweglichen Bettes, den konstanten Durchsatz in der Zone k des beweglichen simulierten äquivalenten Bettes und den Durchsatz in der Zone k des beweglichen simulierten Bettes mit konstanter Recyclierung, wenn die Pumpe sich in der Zone p befindet, darstellen.

3. Verfahren nach Anspruch 1, bei dem man gleichzeitig längs des Zyklus sämtliche Einführungs- und Entnahmekreise bei Zeitintervallen $(T_{i+1} - T_i)$ permutieren läßt, wo i, zwischen 0 und n-1, die Anzahl von Malen ist, wo die Gesamtheit der Einführungs- und Entnahmepunkte bereits seit dem Beginn des Zyklus permutiert hat, $(T_{i+1} - T_i)$ definiert ist durch die folgende Beziehung:

$$0,975 \, T \cdot Q_M < (T_{i+1} - T_i) \cdot Q_{M_k} < 1,025 \, T \cdot Q_M$$

und bevorzugt durch die folgende Beziehung

$$0,9975 \, T \cdot Q_M < (T_{i+1} - T_i) \cdot Q_{M_k} < 1,0025 \, T \cdot Q_M$$

wo $T$, $Q_M$ und $Q_{Mk}$ jeweils das konstante Zeitintervall des beweglichen simulierten konventionellen äquivalenten Bettes, den gewichtsbezogenen mittleren Durchsatz in den Trennzonen des simulierten beweglichen konventionellen äquivalenten Bettes, den gewichtsbezogenen mittleren Durchsatz in den Trennzonen des beweglichen simulierten Bettes mit konstanter Recyclierung bedeuten, wenn die Recyclierungspumpe sich in der Zone k befindet.

4. Verfahren nach einem der Ansprüche 1 bis 3, bei dem die konstante Recyclierungsmenge zwischen dem größten der Recyclierungsdurchsätze des beweglichen simulierten konventionellen äquivalenten Bettes und dem größten der beiden Werte liegt, der gewählt ist aus dem geringsten der Recyclierungsdurchsätze des beweglichen simulierten konventionellen äquivalenten Bettes und dem größten der Eintrittsdurchsätze.

5. Verfahren nach einem der Ansprüche 1 bis 3, bei dem der konstante Recyclierungsdurchsatz $Q_c$ im wesentlichen gleich dem mittleren gewichtsbezogenen Durchsatz $Q_M$ des beweglichen simulierten konventionellen äquivalenten Bettes ist.

**EP 0 679 421 B1**

6. Verfahren nach einem der Ansprüche 1 bis 5, bei dem das bewegliche simulierte Bett auf Gegenstrom arbeitet.

7. Verfahren nach einem der Ansprüche 1 bis 5, bei dem das bewegliche simulierte Bett im Gleichstrom arbeitet.